# NEUE EUROPÄISCHE PATENTSCHRIFT

(11) **EP 2 123 497 B2**
(45) Veröffentlichungstag und Bekanntmachung des Hinweises auf die Entscheidung über den Einspruch: **30.10.2019**
(45) Hinweis auf die Patenterteilung: 06.11.2013
(21) Anmeldenummer: 09005430.5
(22) Anmeldetag: 16.04.2009
(51) Int. Cl.: B60J 10/02

(54) **Profilelement zum Verbinden einer Fahrzeugscheibe mit einem Wasserkasten**
Profile element for connecting a vehicle pane with a water chamber
Elément de profil destiné à relier une plaque de véhicule à un réservoir d'eau

(30) Priorität: 23.05.2008 DE 202008006986 U
(43) Veröffentlichungstag der Anmeldung: 25.11.2009
(73) Patentinhaber: Elkamet Kunststofftechnik GmbH, 35216 Biedenkopf (DE)
(72) Erfinder: Platt, Wolfgang, 35216 Biedenkopf- Kombach (DE); Ortmüller, Michael, 35216 Biedenkopf (DE); Weller, Daniel, 35764 Sinn (DE)
(74) Vertreter: DREISS Patentanwälte PartG mbB

(56) Entgegenhaltungen:
- EP-A- 0 249 560
- EP-A- 1 571 069
- EP-A- 1 724 141
- WO-A-2006/002891
- WO-A1-01/85481
- DE-A1- 1 480 058
- DE-A1- 10 122 637
- DE-A1-102004 030 465
- DE-U1- 20 008 555
- FR-A- 2 817 302

## Beschreibung

Die Erfindung betrifft ein Profilelement zum Verbinden einer Fahrzeugscheibe mit einem Wasserkasten, gemäß dem Oberbegriff von Anspruch 1.

Bei Fahrzeugen befindet sich unterhalb der Fahrzeugscheibe, beispielsweise der Windschutzscheibe, ein Wasserkasten, der von der Scheibe abfließendes Wasser auffängt und seitlich abführt. Zur Festlegung und Abdichtung des Wasserkastens an der Unterkante der Fahrzeugscheibe verwendet man beispielsweise einen extrudierten Profilkörper oder Profilstrang, der randseitig mit der Fahrzeugscheibe fest verbunden wird und der zur lösbaren Aufnahme des Wasserkastens eine Rastnut aufweist.

Damit im Übergangsbereich von der Scheibenfläche zum Profilkörper keine Stufe oder Kante entsteht, offenbart DE 200 08 555 U1 eine Abdichtungs-Anordnung für Fahrzeugscheiben mit einem im Querschnitt hakenförmigen Profilelement, das mit dem unteren Rand der Fahrzeugscheibe verklebt wird. Das Profilelement hat einen Federschenkel, der zusammen mit einer Keilrippe eine nach außen offene Rastausnehmung bildet. Diese nimmt den Wasserkasten auf, der rückseitig mit einer einspringenden Rippe versehen ist. Auf der Keilrippe sitzt eine Dichtlippe, die zwischen der Scheiben-Unterkante und dem oberen Rand der Wasserkasten-Abdeckung einpassbar ist und in montierter Position mit den Außenflächen des Wasserkastens und der Fahrzeugscheibe bündig abschließt. Unterhalb der Rastnut ist eine Pufferleiste aus einer weicheren Komponente vorgesehen, mit der sich die Abdichtungs-Anordnung an der Karosserie abstützen kann.

Die Abstützung des Profilelements gegenüber der Karosserie ist notwendig, weil beim Einrasten des Wasserkastens in das Profilelement senkrecht zur Scheibenfläche ein relativ hoher Widerstand überwunden werden muss. Dieser wiederum ist notwendig, damit der Wasserkasten stets sicher an dem Profilelement fixiert ist und sich nicht während der Fahrt oder aufgrund anderer mechanischer oder thermischer Belastungen versehentlich lösen kann. Allerdings ist es zu Wartungszwecken oft notwendig, dass der Wasserkasten von der Fahrzeugscheibe gelöst und wieder montiert wird, beispielsweise um einen Filter zu wechseln.

Beim Montieren des Wasserkastens treten jedoch stets relativ hohe Kräfte auf, die unmittelbar auf die Verklebung des Profilkörpers mit der Fahrzeugscheibe einwirken. Fehlt daher eine Abstützung des Profilkörpers gegenüber der Karosserie oder ist kein Karosseriebereich vorhanden, an dem sich der Profilkörper abstützen kann, besteht die Gefahr, dass sich das Profil durch die auftretenden Montagekräfte von der Fahrzeugscheibe ablöst.

Ein weiterer Nachteil der vorbekannten Profile besteht darin, dass die Abstützung auf der Karosserie zu störenden Geräuschen führen kann, insbesondere dann, wenn die weichelastischen Stützelemente auf Dauer ihre Elastizität verlieren.

Ziel der Erfindung ist es, diese und weitere Nachteile des Standes der Technik zu überwinden und ein Profilelement zum Verbinden einer Fahrzeugscheibe mit einem Wasserkasten zu schaffen, das mit einfachen Mitteln kostengünstig aufgebaut ist und eine ebenso einfache wie rasche Montage des Wasserkastens gewährleistet, ohne die Verbindung zwischen dem Profilelement und der Fahrzeugscheibe zu belasten. Der an dem Profilelement montierte Wasserkasten soll dennoch dauerhaft fest fixiert sein und auch stärkeren Belastungen problemlos standhalten.

Die Erfindung ist in Anspruch 1 angegeben. Ausgestaltungen sind Gegenstand der Ansprüche 2 bis 12.

Bei einem Profilelement zum Verbinden einer Fahrzeugscheibe mit einem Wasserkasten, mit einem ersten Abschnitt, der an der Fahrzeugscheibe festlegbar ist, mit einem zweiten Abschnitt, der zur lösbaren Befestigung des Wasserkastens eine Rastausnehmung bildet, wobei der Wasserkasten eine Rippe aufweist, die kraft- und/oder formschlüssig in der Rastausnehmung festlegbar ist, und mit wenigstens einem Dichtelement, das zwischen der Unterkante der Fahrzeugscheibe und dem oberen Rand des Wasserkastens einpassbar ist und in montierter Position des Wasserkastens einen im Wesentlichen glatten und flächenbündigen Übergang zwischen der Fahrzeugscheibe und dem Wasserkasten bildet, sieht die Erfindung vor, dass wenigstens ein Rastelement vorgesehen und derart ausgebildet ist, dass das Einführen der Rippe des Wasserkastens in die Rastausnehmung in einer ersten Richtung erleichtert, das Herausziehen der Rippe aus der Rastausnehmung in entgegengesetzter Richtung hingegen erschwert ist.

Dadurch ist es möglich, den Wasserkasten rasch und bequem zu montieren, denn dessen Rippe lässt sich im Vergleich zu herkömmlichen Profilen mit deutlich geringerem Widerstand bzw. Kraftaufwand in die zugehörige Rastausnehmung einfügen. Auf das Profilelement und dessen Verklebung mit der Fahrzeugscheibe wirken daher deutlich geringere Kräfte ein, so dass sich das Profil nicht mehr ungewollt von der Scheibe lösen kann, selbst nach wiederholtem Aus- und Einbau des Wasserkastens. Auch eine aufwendige Abstützung des Profilelements gegenüber der Karosserie ist nicht mehr notwendig, was sich günstig auf die Herstell- und Montagekosten auswirkt. Mithin können keine störenden Geräusche mehr auftreten, wenn sich die Abstützung des Profilelements und die Karosserie relativ zueinander bewegen.

Beim Herausziehen der Rippe hingegen muss durch die erfindungsgemäße Ausbildung des Rastelements eine deutlich größere Kraft aufgewendet werden, so dass der Wasserkasten nach der Montage stets fest an dem Profilelement fixiert ist. Der Wasserkasten kann sich selbst bei stärkeren mechanischen oder thermischen Belastungen nicht vom Profilelement oder gar vom Fahrzeug lösen, was eine hohe Betriebssicherheit gewährleistet. Die gesamte Anordnung ist einfach aufgebaut und außerordentlich stabil.

Für die Dimensionierung der Ein- und Ausbaukräfte ist es günstig, wenn das bzw. jedes Rastelement in einem Winkel zur Fügerichtung angeordnet ist. Es kann beispielsweise beim Einführen der Rippe des Wasserkastens in die Rastausnehmung leicht zur Seite gedrückt bzw. gebogen werden, während beim Abnehmen des Wasserkastens die Rippe das Rastelement zunächst stauchen muss, bevor dieses die Rippe freigibt.

Durch die Winkelstellung des Rastelements gegenüber der Montagerichtung bildet das bzw. jedes Rastelement einen Widerhaken für die in die Rastausnehmung eingeführte Rippe des Wasserkastens, so dass dieser nur nach Überwinden des Widerhakens mit einer vorbestimmten Kraft von dem Profil gelöst werden kann, um beispielsweise darunter angeordnete Bauteile warten oder reparieren zu können. Umgekehrt lässt sich der Widerstand des Widerhakens beim Einführen der Rippe in die Rastausnehmung relativ leicht überwinden, so dass das Profilelement und dessen Verbindung zur Fahrzeugscheibe kaum belastet werden.

Günstig ist ferner, wenn das bzw. jedes Rastelement zumindest teilweise ein elastisch verformbarer Körper ist. Dieser gibt beim Einführen der Rippe in die Rastausnehmung relativ leicht nach, während ein Ausweichen des Rastelements beim Herausziehen der Rippe aus dem Profilelement trotz der Elastizität deutlich erschwert ist, beispielsweise indem das Rastelement gestaucht werden muss, bevor es die Rippe freigibt. Um die Funktion des Widerhakens zu unterstützen, kann das bzw. jedes Rastelement an seiner freien Längskante mit einer Wölb- oder Nasenkante versehen sein, die sich- je nach Ausführungsform- an der Rippe des Wasserkastens und/oder an dem Profilelement abstützt.

Eine wichtige Ausführungsform der Erfindung sieht vor, dass das bzw. jedes Rastelement innerhalb der Rastausnehmung angeordnet und kraft- und/oder formschlüssig mit der Rippe des Wasserkastens in Eingriff bringbar ist. Hierbei lassen sich verschiedenste Ausgestaltungen realisieren. So kann z.B. das Rastelement in einem Winkel zur Fügerichtung an einer Tragrippe des Profilelements und/oder an einem Federschenkel der Rastausnehmung angebracht sein.

Weitere Vorteile ergeben sich, wenn die Rastausnehmung eine Eingriffsöffnung hat oder bildet, wobei das bzw. jedes Rastelement zumindest abschnittsweise in die Eingriffsöffnung hineinragt. Dadurch gelangt die Rippe des Wasserkastens beim Einführen in die Rastausnehmung sofort mit dem Rastelement in Eingriff, wobei letzteres zunächst von der Rippe nach innen weggedrückt wird, so dass sich der Wasserkasten ohne großen Kraftaufwand leicht montieren lässt. Nach dem Einrasten der Rippe in der Rastausnehmung hingegen steht das Rastelement mit der Rippe in Eingriff. Es bildet zudem aufgrund seiner Winkelstellung einen Widerhaken und kann nur nach Überwinden einer größeren Kraft zur Seite gedrückt werden. Der Wasserkasten kann sich damit- trotz leichtgängiger Montage- nicht mehr unbeabsichtigt von dem Profilelement lösen.

Für zusätzliche Stabilität innerhalb des Profilelements sorgt die Ausgestaltung, wonach sich die Wölb-bzw. Nasenkante des bzw. jedes Rastelements in montierter Stellung des Wasserkastens an dessen Rippe abstützt. Letztere kann hierzu mit einem Hinterschnitt, einer Stufe o.dgl. versehen sein.

Bei einer nicht beanspruchten Alternative kann das bzw. jedes Rastelement an der Rippe des Wasserkastens angeordnet sein, wobei das Rastelement kraft- und/oder formschlüssig mit dem Profilelement in Eingriff bringbar ist. Auch hierdurch ist eine ebenso einfache wie rasche Montage des Wasserkastens gewährleistet, ohne dass die Verbindung zwischen dem Profilelement und der Fahrzeugscheibe während der Montage belastet wird. Gleichzeitig ist der an dem Profilelement montierte Wasserkasten derart fest fixiert, dass die gesamte Anordnung auch stärkeren Belastungen problemlos standhalten kann, gleichzeitig aber dennoch eine Demontage des Wasserkastens ermöglicht, ohne das Profilelement zu beschädigen.

Das Rastelement wirkt in dieser Ausführungsform gegenüber dem Profilelement als Widerhaken, der die Fügekräfte deutlich reduziert, dennoch aber den montierten Wasserkasten fest fixiert. Die Wölb- oder Nasenkante des bzw. jedes Rastelements stützt sich dabei an der Tragrippe oder dem Federschenkel ab, die hierzu einen Hinterschnitt, eine Stufe o.dgl. aufweisen können.

Die Erfindung sieht vor, dass zwischen dem ersten Abschnitt und dem zweiten Abschnitt des Profilelements eine Tragrippe ausgebildet ist, welche das wenigstens eine Dichtelement trägt. Letzteres sorgt für die notwendige Abdichtung der Flächenübergänge zwischen dem Wasserkasten und der Fahrzeugscheibe, während die Tragrippe selbst zwischen dem unteren Rand der Windschutzscheibe und der Rippe des Wasserkastens einen elastischen Klemm- und/oder Stützkörper bildet.

Die Rastausnehmung des Profilelements wird von einem Federschenkel und der Tragrippe gebildet, wobei das freie Ende des Federschenkels und die Tragrippe eine Eingriffsöffnung begrenzen. Dabei kann der Federschenkel im Wesentlichen L-, U- oder hakenförmig ausgebildet sein. Zusätzlich kann das freie Ende des Federschenkels innerhalb der Rastausnehmung mit einer Hinterschneidung versehen sein, in welche die Rippe des Wasserkastens oder das Rastelement eingreifen können.

Die Rippe des Wasserkastens wird mithin in verrasteter Position durch den nach außen vorspringenden Federschenkel stets fest umschlossen, während die Tragrippe für die Rippe einen Klemmkörper bildet. Gleichzeitig stützt die Tragrippe das Dichtelement, wodurch das Profilelement nicht nur den Wasserkasten und die Fahrzeugscheibe gegeneinander abdichtet, sondern zudem auch kraft- und formschlüssig miteinander verbindet. Erfindungsgemäß ist eine Hinterschneidung an der Tragrippe innerhalb der Rastausnehmung für die Rippe des Wasserkastens gebildet.

Das bzw. jedes Dichtelement und/oder das bzw. jedes Rastelement sind bevorzugt stoffschlüssig mit der Tragrippe verbunden. Sämtliche Elemente können aber auch einstückig ausgebildet sein. Dadurch lassen sich die verschiedensten Ausgestaltungen realisieren, indem die einzelnen Elemente ein- oder mehrteilig ausgebildet werden.

Das Dichtelement und das Rastelement sind bevorzugt aus einem weichelastischen Material gefertigt, während die Abschnitte des Profilelements und die Tragrippe aus einem härteren, aber dennoch elastischen Material bestehen. Die einzelnen Elemente oder das gesamte Profilelement können aber auch aus einer Materialkombination bestehen, namentlich in Form eines Verbundkörpers aus weichem und hartem Material. So kann beispielsweise die Dichtlippe außen weich und innen hart sein; sie kann speziell innen massiv oder hohl-hart und außen weich sein. Andere Varianten sind ebenfalls möglich. Das Rastelement kann außen weich und innen aus einem härteren aber dennoch flexible Material bestehen. Ebenso kann sie verschiedene Querschnittsformen haben, beispielsweise rechteckig, oval oder konkav. Sie kann ferner eine individuelle, der Rippe des Wasserkastens angepasste Form aufweisen oder zumindest abschnittsweise als Hohlprofil ausgebildet sein. Die Tragrippe des Profilelementes kann im Wesentlichen keilförmig, stufenförmig, T-förmig oder U-förmig ausgebildet sein. Weitere Formgestaltungen sind ebenfalls denkbar.

Der erste Abschnitt, der zweite Abschnitt und/oder die Tragrippe sind zumindest abschnittsweise mit einer elastischen Versteifungs-Einlage versehen. Das gesamte Profil wird dadurch hoch belastbar und dauerhaft stabil.

Fertigungstechnisch ist es günstig, wenn der erste Abschnitt, der zweite Abschnitt und/oder die Tragrippe als Strangpressprofil ausgebildet sind. Dies wirkt sich zudem günstig auf die Herstellkosten aus.

Die gesamte Abdichtungsanordnung ist für Fahrzeugscheiben vorgesehen, insbesondere für den unteren Bereich einer Kraftfahrzeug-Windschutzscheibe. Sie besteht aus der Fahrzeugscheibe, dem daran angebrachten Profilelement und dem darin festlegbaren Wasserkasten.

Das Profilelement ermöglicht eine rasche und einfache Montage des Wasserkastens ohne großen Kraftaufwand, so dass die Verbindung zwischen dem Profilelement und der Fahrzeugscheibe auch bei wiederholter Montage des Wasserkastens nicht belastet wird. Gleichzeitig wird der Wasserkasten in montierter Stellung kraft- und formschlüssig im Profilelement gehalten, so dass eine dauerhaft feste Verbindung entsteht, die auch stärkeren mechanischen und thermischen Belastungen dauerhaft standhält. Dennoch lässt sich der Wasserkasten wieder abnehmen z.B. um einen Pollenfilter zu wechseln, wobei jedoch eine größere Kraft aufgewendet werden muss als bei der Montage.

Weitere Merkmale. Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer montierten Abdichtungs-Anordnung mit einem erfindungsgemäßen Profilelement,
- Fig. 2: eine schematische Schnittansicht der Abdichtungs-Anordnung von Fig. 1 vor der Montage des Wasserkastens und
- Fig. 3: eine schematische Schnittansicht der Abdichtungs-Anordnung von Fig. 1 während des Fügevorgangs.

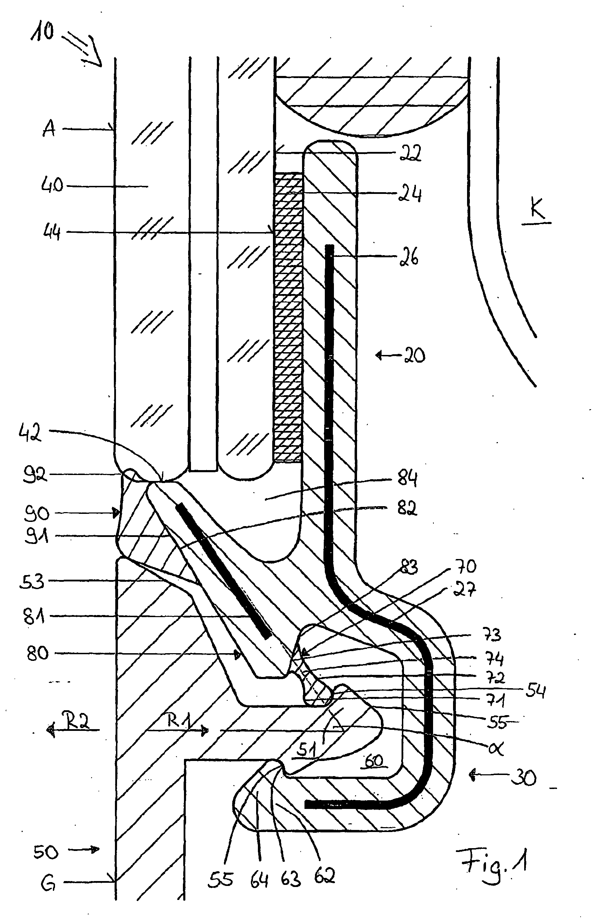

Das in Fig. 1 allgemein mit 10 bezeichnete Profilelement dient der Verbindung einer Fahrzeugscheibe 40 mit einem Wasserkasten 50. Die Fahrzeugscheibe 40 ist beispielsweise eine Windschutzscheibe aus Verbundglas, die in einer (nicht dargestellten) Karosserie eines (ebenfalls nicht gezeigten) Pkws eingebaut wird. Der gewöhnlich aus einem Kunststoff gefertigte Wasserkasten 50 schließt mit einer Oberkante 53 an die meist gebogene Unterkante 42 der Windschutzscheibe 40 an und führt von dieser abfließendes Wasser nach außen ab. Die Außenfläche G des Wasserkastens 50 liegt bevorzugt fluchtend zur Außenfläche A der Windschutzscheibe 40.

Das Profilelement 10 ist bevorzugt ein Strangpressprofil, dessen Länge der Breite der Windschutzscheibe 40 bzw. der Breite des Wasserkastens entspricht. Es besteht aus einem oder mehreren Kunststoffen (Thermoplaste oder Duroplaste) jeweils geeigneter Härte, beispielsweise Polypropylen (PP), Polyvinylchlorid (PVC), Acrylnitril-Butadien-Styrol-Copolymeren (ABS) o.dgl. und/oder aus Kombinationen davon. Verwendbar sind aber auch Elastomere bzw. Gummiwerkstoffe wie z.B. EPDM. Ein erster Abschnitt 20 des Profilelements 10 hat zur Festlegung an der Fahrzeugscheibe 40 eine Fläche 22. Auf dieser ist eine Haftschicht 24 in Form eines doppelseitigen Klebebandes aufgebracht, das beispielsweise hitzeaktivierbar ist. Das Profilelement 10 wird mit dem Klebeband 24 entlang der Scheibenkante 42 auf der Rückseite 44 der Fahrzeugscheibe 40 angepresst und mit dieser verklebt.

Das Profilelement 10 hat ferner einen zweiten Abschnitt 30. der zur lösbaren Befestigung des Wasserkastens 50 eine Rastausnehmung 60 aufweist, wobei der Wasserkasten 50 rückseitig mit einer ein- bzw. vorspringenden Rippe 51 versehen ist, die kraft- und/oder formschlüssig in der Rastausnehmung 60 festlegbar ist. Man erkennt in Fig. 1, dass sich die Rippe 51 des Wasserkastens in einer Richtung R1 erstreckt, die etwa senkrecht zur Außenfläche G des Wasserkastens 50 bzw. zur Außenfläche A der Frontscheibe 40 verläuft. Die Anordnung von Fahrzeugscheibe 40, Profilelement 10 und Wasserkasten 50 ist ferner so getroffen, dass die federelastische Rippe 51 des Wasserkastens 50 in Richtung R1 in die Rastausnehmung 60 des Profilelements 10 einführbar und in entgegengesetzter Richtung R2 wieder aus dem Profilelement 10 lösbar ist.

Die Rastausnehmung 60 wird von einem im Wesentlichen L-. U- oder hakenförmigen Federschenkel 62 sowie einer Tragrippe 80 begrenzt, die zwischen dem ersten Abschnitt 20 und dem zweiten Abschnitt 30 des Profilelements 10 ausgebildet ist. Das freie Ende 64 des Federschenkels 62 und die Tragrippe 80 bilden dabei eine Eingriffsöffnung 61 für die Rippe 51 des Wasserkastens 50.

Die Tragrippe 80 ist im Querschnitt etwa keil- und/oder T-förmig ausgebildet. Sie bildet zwischen der Scheiben-Unterkante 42 und der nach innen vorspringenden Rippe 51 des Wasserkastens 50 einen Klemm- bzw. Stützkörper, der auf einer Fläche 91 das Dichtelement 90 trägt. Letzteres ist bevorzugt aus einem weich-elastischen Material gefertigt, beispielsweise einem thermoplastischem Elastomer (TPE), einem Moosgummi oder einem anderen geeigneten Material wie z.B. einem Elastomer oder Gummiwerkstoff. Es liegt mit einer Nasenkante 92 dichtend an der Unterkante 42 der Fahrzeugscheibe 40 an und wird- nach der Montage des Wasserkastens 50- zwischen der Scheiben-Unterkante 42 und der Oberkante 53 des Wasserkastens 50 derart verpresst, dass die (nicht näher bezeichnete) Außenfläche des Dichtelements 90 bündig mit der Außenfläche A der Scheibe 40 und der Außenfläche G des Wasserkastens 50 abschließt. Es entsteht mithin ein im Wesentlichen glatter und flächenbündiger Übergang zwischen der Fahrzeugscheibe 40 und dem Wasserkasten 50.

Das Dichtelement 90 ist bevorzugt stoffschlüssig mit der Tragrippe 80 verbunden. Es kann aber auch einstückig mit diesem ausgebildet sein.

Die Tragrippe 80 und der erste Abschnitt 20 des Profilelementes 10 bilden im Bereich der Scheiben-Unterkante 42 bevorzugt eine Höhlung 84, wodurch die in montierter Position gegen die Scheibe 40 abstützende Tragrippe 80 elastisch nachgeben kann. Dadurch ist nicht nur eine dauerhaft gute und zuverlässige Abdichtung gewährleistet. Die Tragrippe 80 und die Dichtlippe 90 können auch Toleranzen zwischen der Scheibe 40 und dem Wasserkasten 50 ausgleichen.

Der Federschenkel 62 ist an seinem freien Ende 64 innerhalb der Rastausnehmung 60 mit einer Hinterschneidung 63 versehen. Diese hintergreift in montierter Stellung des Wasserkastens 50 eine an der Rippe 51 ausgebildete Nasenkante 52, so dass die Rippe 51 stets kraft- und oder formschlüssig in der Rastausnehmung 60 des Profilelements 10 fixiert ist. Um die Rippe 51 in die Rastausnehmung 60 besser einführen zu können, sind die Nasenkante 52 und das freie Ende 64 des Federschenkels 62 mit (nicht näher bezeichneten) Schrägflächen versehen. Auch die Tragrippe 80 ist innerhalb der Rastausnehmung 60 mit einer Hinterschneidung 83 versehen, deren Funktion weiter unten erläutert wird.

Um eine ebenso einfache wie rasche Montage des Wasserkastens 50 gewährleisten zu können- ohne dabei die Klebeverbindung zwischen dem Profilelement 10 und der Fahrzeugscheibe 40 zu belasten- ist innerhalb der Rastausnehmung 60 ein Rastelement 70 in Form einer Rippe vorgesehen, die sich in Längsrichtung des Profils 10 erstreckt. Es handelt sich um einen zumindest teilweise elastisch verformbaren Körper, der aus einem weich-elastischen Material, beispielsweise einem thermoplastischem Elastomer (TPE), einem Moosgummi oder einem anderen geeigneten Material, gefertigt und derart ausgebildet ist, dass das Einführen der Rippe 51 des Wasserkastens 50 in die Rastausnehmung 60 in Fügerichtung R1 mit relativ geringem Kraftaufwand möglich ist, während das Herausziehen der Rippe 51 aus der Rastausnehmung 60 in entgegengesetzter Richtung R2 deutlich erschwert wird.

Wie Fig. 1 zeigt, liegt das Rastelement 70 innerhalb der Rastausnehmung 60 in einem Winkel α zur Richtung R1, R2 und damit in einem spitzen Winkel zur Rippe 51 des Wasserkastens 50. Es ragt ferner zumindest abschnittsweise in die Eingriffsöffnung 61 der Rastausnehmung 60 hinein und ist innerhalb dieser kraft- und/oder formschlüssig mit der Rippe 51 des Wasserkastens 50 in Eingriff bringbar, so dass letzterer in montierter Stellung dauerhaft fest aber lösbar fixiert wird.

Um dies zu unterstützen ist das Rastelement 70 an seiner freien Längskante 72 mit einer Wölb- oder Nasenkante 71 versehen ist, während die Rippe 51 des Wasserkastens 50 mit einer zugeordneten Nasenkante 52 bzw. Hinterschneidung versehen ist. Dadurch kann sich das freie Ende des Rastelements 70 bzw. dessen Wölb- oder Nasenkante 71 in montierter Stellung des Wasserkastens 50 an dessen ebenfalls in Längsrichtung des Profilelements 10 erstreckenden Rippe 51 abstützen, so dass eine dauerhaft feste Verrastung gewährleistet ist.

Wie Fig. 1 weiter zeigt, ist das Rastelement 70 ebenso wie das Dichtelement 90 an der Tragrippe 80 festgelegt und zwar im Bereich der Hinterschneidung 83. Es hat ferner zwischen dem Anbindungsbereich 73 an der Tragrippe 80 und der endseitig ausgebildeten Wölb- oder Nasenkante 71 einen verjüngt ausgebildeten Abschnitt 74, so dass sich eine etwa konkave Querschnittsfläche ergibt. Diese ermöglicht es dem Rastelement 70 seitlich oder quer zu dessen Längsrichtung auszuweichen, sobald die Rippe 51 des Wasserkastens 50 in die Rastausnehmung 60 eingeführt wird. Um diesen Effekt zu unterstützen ist die Rippe 51 endseitig mit einer Schrägfläche oder -flanke 55 versehen, welche das Rastelement 70 zur Seite drücken kann. Je nach gewünschtem Kraftaufwand für das Einführen der Rippe 51 in die Rastausnehmung 60 kann das Rastelement 70 im Querschnitt auch keil- oder quaderförmig ausgebildet sein.

Das Rastelement 70 ist- wie auch das Dichtelement 90- bevorzugt stoffschlüssig mit der Tragrippe 80 verbunden. Es kann aber auch einstückig mit diesem ausgebildet sein.

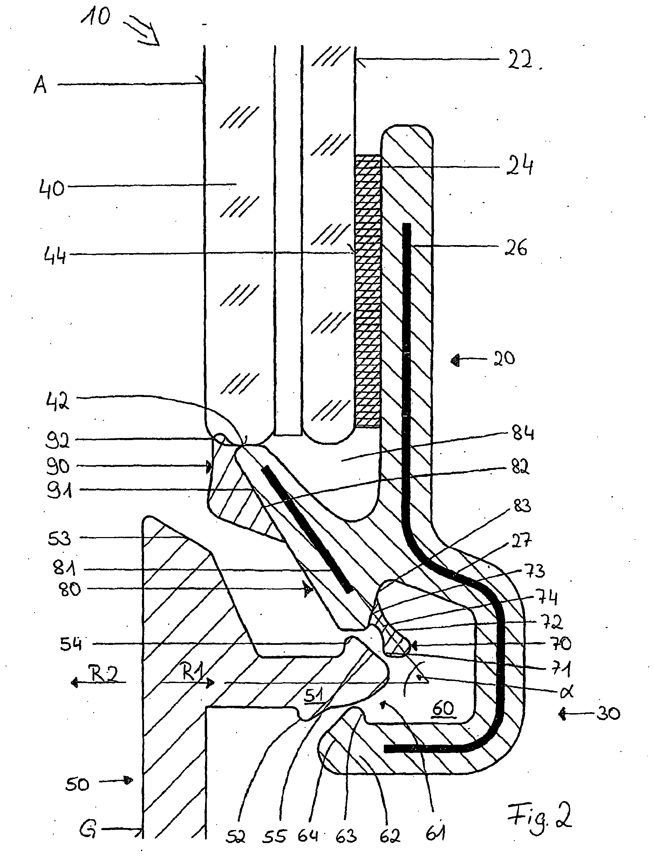

Fig. 2 veranschaulicht die Abdichtungs-Anordnung bestehend aus Fahrzeugscheibe 40, daran befestigtem Profilelement 10 und Wasserkasten 50 in noch nicht montiertem Zustand. Die Rippe 51 des Wasserkastens 50 ist mithin noch nicht in der Rastausnehmung 60 des Profilelements 10 verrastet.

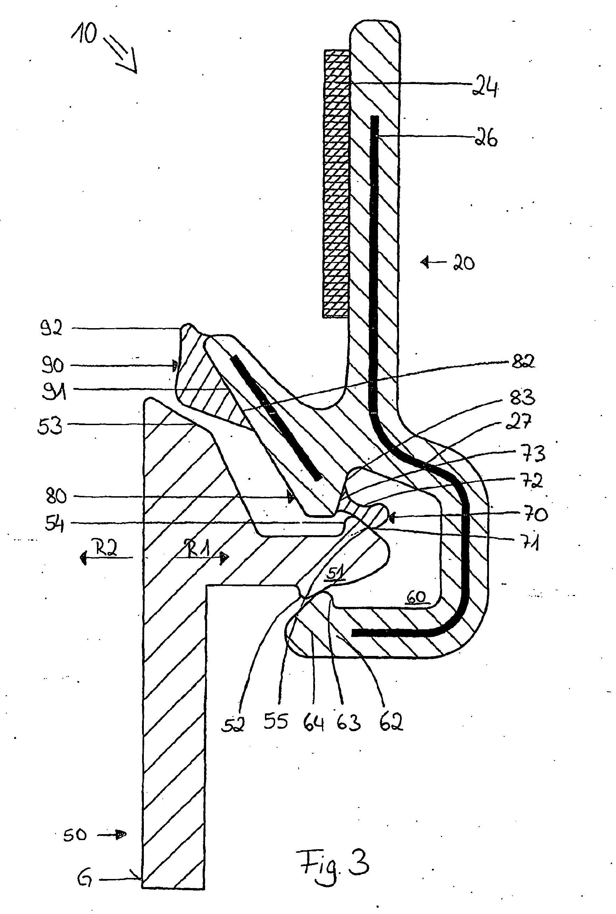

Man erkennt jedoch in Fig. 3, dass die Rippe 51 des Wasserkastens 50 beim Einführen in die Rastausnehmung 60 das in dem Winkel α zur Fügerichtung R1 in die Eingriffsöffnung 61 der Rastausnehmung 60 hineinragende Rastelement 70 verdrängt. Dabei schiebt die Rippe 51 das Rastelement 70 mit seiner Schrägflanke 55 in die Hinterschneidung 83 des Tragkörper 80 hinein zur Seite, was aufgrund des gewählten Querschnitts sowie des gewählten Materials für das Rastelement 70 relativ leicht ausführbar ist. Die Rippe 51 des Wasserkastens 50 lässt sich dadurch mit relativ geringem Kraftaufwand in das Profilelement 10 einrasten, dessen Klebeverbindung zur Fahrzeugscheibe 40 mithin kaum belastet wird. Eine zusätzliche Abstützung des Profilelements 10 gegenüber der Karosserie ist nicht erforderlich.

Sobald der Wasserkasten 50 seine Endstellung erreicht hat, hintergreift das Rastelement 70 die an der Rippe 51 ausgebildete Hinterschneidung 54, wobei sich die Wölb- oder Nasenkante 71 des Rastelements 70 kraft- und/oder formschlüssig an der Rippe 51 abstützt. Das Rastelement 70 bildet mithin einen Widerhaken, der den Wasserkasten 50 bzw. dessen Rippe 51 kraft- und formschlüssig in der Rastausnehmung 60 bzw. am Profilelement 10 festlegt.

Will man den Wasserkasten 50 wieder aus seiner Verrastung mit dem Profilelement 10 lösen, muss die Rippe 51 den innerhalb der Rastausnehmung 60 quer stehenden Widerhaken 70 überwinden, was jedoch deutlich mehr Kraft erfordert als der Fügevorgang. Der Wasserkasten 50 ist damit stets sicher und zuverlässig in dem Profilelement 10 verankert, kann aber bei Bedarf dennoch ausgebaut und wie oben beschrieben ohne großen Kraftaufwand wieder montiert werden.

In den ersten Abschnitt 20 des Profilelements 10 und in den Federschenkel 62 des zweiten Abschnitts 30 ist bevorzugt eine Versteifungs-Einlage 26 eingearbeitet, beispielsweise ein Aluminium- oder Stahlband. Diese Versteifungs-Einlage 26 kann bis an einen Biegungs-Übergang 27 zwischen dem ersten Abschnitt 20 und dem zweiten Abschnitts 30 des Profilelements 10 reichen oder-wie dargestellt-sich bis in den Federschenkel 62 hinein erstrecken. Sie folgt dabei allgemein der Form des Profilelements 10, kann aber auch kürzer oder länger als gezeichnet ausgebildet sein. Eine Versteifungseinlage 81 innerhalb der Tragrippe 80 erhöht weiter die Stabilität des Profilelements 10 und die Tragfähigkeit der Rippe 80.

Im mittleren Teilflächen-Bereich des ersten Abschnitts 20 kann ferner eine Perforation in Form einer Lochreihe (nicht dargestellt) angebracht sein. Zwei oder mehr Lochreihen sind ebenfalls möglich. Dadurch kann Kleber einer ergänzend über dem ersten Abschnitt 20 des Profilelements 10 aufgebrachten (nicht gezeigten) Kleberaupe bis an die Rückseite 44 der Schreibe 40 vordringen.

Die Erfindung ist nicht auf eine der vorbeschriebenen Ausführungsformen beschränkt, sondern in vielfältiger Weise abwandelbar. So kann man das Rastelement anstelle an der Tragrippe 80 an dem Federschenkel 62 vorsehen. Die Rippe 51 des Wasserkastens 50 wäre dann entsprechend gespiegelt auszubilden. Denkbar ist aber auch zwei Rastelemente 70 vorzusehen, die zu beiden Seiten der Rippe 51 angeordnet sind. Eine weitere Variante sieht vor, dass wenigstens ein Rastelement 70 an der Rippe 51 des Wasserkastens 50 angeordnet ist. Die Wölb- oder Nasenkante 71 des bzw. jedes Rastelements 70 würde sich dabei in montierter Stellung des Wasserkastens 50 an dem Profilelement 10 abstützen, so dass das Rastelement kraft- und/oder formschlüssig mit dem Profilelement 10 in Eingriff gelangt. Man kann ferner je ein Rastelement 70 an dem Profilelement 10 und eines an der Rippe 51 des Wasserkastens 50 ausbilden.

Bei allen Ausführungsformen arbeitet das Rastelement 70 stets in der Art eines Widerhakens, der das Einführen der Rippe 51 in die Rastausnehmung 60 ohne größeren Kraftaufwand zuläßt. Das Herausziehen der Rippe 51 aus der Rastausnehmung 60 jedoch erschwert, so dass der Wasserkasten 50 leicht montierbar aber stets fest fixiert und bei Bedarf demontierbar ist.

Zusammenfassend ist festzuhalten, dass ein Profilelement 10 zum Verbinden einer Fahrzeugscheibe 40 einen an der Fahrzeugscheibe 40 festlegbaren ersten Abschnitt 20 und einen eine Rastausnehmung 60, zur lösbaren Befestigung eines Wasserkastens 50, bildenden zweiten Abschnitt 30 aufweist. Der Wasserkasten 50 weist eine Rippe 51 auf, die kraft- und /oder formschlüssig in der Rastausnehmung 60 festlegbar ist. Zwischen der Unterkante 42 der Fahrzeugscheibe 40 und dem oberen Rand 53 des Wasserkastens 50 ist wenigstens ein Dichtelement 90 einpassbar. Diese bildet einen im Wesentlichen glatten und flächenbündigen Übergang zwischen der Fahrzeugscheibe 40 und dem Wasserkasten 50.

Ein Rastelement 70 für die Rippe 51 des Wasserkastens 50 ist derart ausgebildet, dass es das Einführen der Rippe 51 in die Rastausnehmung 60 des Profilelements 10 erleichtert, das Herausziehen der Rippe 51 aus der Rastausnehmung 60 in entgegengesetzter Richtung hingegen deutlich erschwert.

Das zumindest teilweise elastisch verformbare Rastelement 70 ist in einem Winkel α zur Fügerichtung R1 angeordnet, wodurch es für die verrastete Rippe 51 des Wasserkastens 50 einen Widerhaken bildet. Das zumindest abschnittsweise in die Eingriffsöffnung 61 der Rastausnehmung 60 hineinragende Rastelement 70 stützt sich mit seiner Wölb- oder Nasenkante 71 in montierter Stellung an der Rippe 51 des Wasserkastens 50 oder am Profilelement 10 ab, welche dazu Hinterschneidungen 52, 63, 83 aufweisen.

Zwischen dem ersten 20 und dem zweiten Abschnitt 30 des Profilelements 10 ist eine Tragrippe 80 vorgesehen, die keilförmig und/oder T-förmig bzw. U-förmig sein kann. An dieser Tragrippe 80 steht das wenigstens eine Dichtelement 90 nach außen vor.

Die Rastausnehmung 60 wird von der Tragrippe 80 und einem Federschenkel 62 gebildet, der im Querschnitt L-, U- oder hakenförmig ausgebildet ist. Das Rastelement 70 und das Dichtelement 90 können mit der Tragrippe 80 einstückig oder fest verbunden sein und weisen insbesondere einen weich-elastisch verformbaren Wölbkörper auf.

Das Profilelement 10 und/oder das Rastelelement 70 und/oder die Dichtlippe 90 können aus einer Materialkombination bestehen, z.B. in Form eines Verbundkörpers, der außen weich und innen hart ist. Versteifungseinlagen 26, 81 erhöhen die Elastizität. Zweckmäßig weist die Anlagefläche 22 des Profilelements 10 zueinander höhenversetzte Berührungsbereiche auf. Dazwischen kann am- gegebenenfalls perforierten- ersten Abschnitt 20 eine Haftschicht eingeschlossen sein, z.B. ein satt in einer Auskehlung anliegendes, doppelseitig beschichtetes Klebeband, das auch perforiert sein kann.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Außenfläche (von 40)
- G: Außenfläche (von 50)
- R1: Richtung
- R2: Richtung
- K: Karosserie
- α: Winkel
- 10: Profilelement
- 20: erster Abschnitt
- 22: Fläche
- 24: Haftschicht
- 26: Versteifungs-Einlage
- 27: Biegungs-Übergang
- 28: Kleberaupe
- 30: zweiter Abschnitt
- 40: Fahrzeugscheibe
- 42: Scheiben-Unterkante
- 44: Rückseite
- 50: Wasserkasten
- 51: Rippe
- 52: Nasenkante/Hinterschneidung
- 53: Oberkante
- 54: Nasenkante/Hinterschneidung
- 55: Schrägfläche/-flanke
- 60: Rastausnehmung
- 61: Öffnung
- 62: Federschenkel
- 63: Hinterschneidung
- 64: freies Ende
- 70: Rastelement
- 71: Nasenkante
- 72: Längskante
- 73: Anbindungsbereich
- 74: Abschnitt
- 80: Tragrippe
- 81: Versteifungs-Eintage
- 82: Hart/Weich-Grenze
- 83: Hinterschneidung
- 84: Höhlung
- 90: Dichtlippe
- 91: (Schräg-) Fläche
- 92: Nasenkante

## Patentansprüche

1. Profilelement (10) zum Verbinden einer Fahrzeugscheibe (40) mit einem Wasserkasten (50), mit einem ersten Abschnitt (20), der an der Fahrzeugscheibe festlegbar ist, mit einem zweiten Abschnitt (30), der zur lösbaren Befestigung des Wasserkastens (50) eine Rastausnehmung (60) hat oder bildet, wobei der Wasserkasten (50) eine Rippe (51) aufweist, die kraft- und/oder formschlüssig in der Rastausnehmung (60) festlegbar ist, und mit wenigstens einem Dichtelement (90), das zwischen der Unterkante (42) der Fahrzeugscheibe (40) und dem oberen Rand (53) des Wasserkastens (50) einpassbar ist und in montierter Position des Wasserkastens (50) einen im Wesentlichen glatten und flächenbündigen Übergang zwischen der Fahrzeugscheibe (40) und dem Wasserkasten (50) bildet, **dadurch gekennzeichnet, dass** wenigstens ein Rastelement (70) vorgesehen ist, welches derart ausgebildet ist, dass das Einführen der Rippe (51) des Wasserkastens (50) in die Rastausnehmung (60) in einer ersten Richtung (R1) erleichtert, das Herausziehen der Rippe (51) aus der Rastausnehmung (60) in entgegengesetzter Richtung (R2) hingegen erschwert ist und wobei das bzw. jedes Rastelement (70) in einem Winkel (α) zur Richtung (R1, R2) angeordnet ist und dabei einen Widerhaken bildet, wobei die Rastausnehmung (60) von einem Federschenkel (62) und einer Tragrippe (80) gebildet ist, wobei zwischen dem ersten Abschnitt (20) und dem zweiten Abschnitt (30) des Profilelements (10) die Tragrippe (80) ausgebildet ist, welche das wenigstens eine Dichtelement (90) trägt, wobei das freie Ende (64) des Federschenkels (62) und die Tragrippe (80) eine Eingriffsöffnung (61) der Rastausnehmung (60) begrenzen, wobei das freie Ende (64) des Federschenkels (62) innerhalb der Rastausnehmung (60) mit einer Hinterschneidung (63) versehen und das Rastelement (70) im Bereich der Hinterschneidung (63) an dem Federschenkel (62) festgelegt ist, oder wobei die Tragrippe (80) innerhalb der Rastausnehmung (60) eine Hinterschneidung (83) bildet und das Rastelement (70) im Bereich der Hinterschneidung (83) an der Tragrippe (80) festgelegt ist.

2. Profilelement nach Anspruch 1, **dadurch gekennzeichnet, dass** das bzw. jedes Rastelement (70) zumindest teilweise ein elastisch verformbarer Körper ist.

3. Profilelement nach einem der Ansprüche 1 bis 2, **dadurch gekennzeichnet, dass** das bzw. jedes Rastelement (70) an seiner freien Längskante (72) mit einer Wölb- oder Nasenkante (71) versehen ist.

4. Profilelement nach einem der Ansprüche 1 bis 3, **dadurch gekennzeichnet, dass** wenigstens ein Rastelement (70) innerhalb der Rastausnehmung (60) angeordnet ist und kraft- und/oder formschlüssig mit der Rippe (51) des Wasserkastens (50) in Eingriff bringbar ist.

5. Profilelement nach Anspruch 4, **dadurch gekennzeichnet, dass** die Rastausnehmung (60) eine Eingriffsöffnung (61) hat oder bildet, wobei das bzw. jedes Rastelement (70) zumindest abschnittsweise in die Eingriffsöffnung (61) hineinragt.

6. Profilelement nach Anspruch 4 bei Rückbezug auf Anspruch 3 oder nach Anspruch 5 bei Rückbezug auf Anspruch 3, **dadurch gekennzeichnet, dass** sich die Wölb- oder Nasenkante (71) des bzw. jedes Rastelements (70) in montierter Stellung des Wasserkastens (50) an dessen Rippe (51) abstützt.

7. Profilelement nach einem der Ansprüche 1 bis 6, **dadurch gekennzeichnet, dass** der Federschenkel (62) im Wesentlichen L-, U- oder hakenförmigen ausgebildet ist.

8. Profilelement nach einem der Ansprüche 1 bis 7, **dadurch gekennzeichnet, dass** das bzw. jedes Dichtelement (90) und/oder das bzw. jedes Rastelement (70) stoffschlüssig mit der Tragrippe (80) verbunden sind.

9. Profilelement nach einem der Ansprüche 1 bis 8, **dadurch gekennzeichnet, dass** das bzw. jedes Dichtelement (90) und/oder das bzw. jedes Rastelement (70) mit der Tragrippe (80) einstückig ausgebildet sind.

10. Profilelement nach einem der Ansprüche 1 bis 9, **dadurch gekennzeichnet, dass** der erste Abschnitt (20), der zweite Abschnitt (30) und/oder die Tragrippe (80) zumindest abschnittsweise mit einer Versteifungs-Einlage (26) versehen sind.

11. Profilelement nach einem der Ansprüche 1 bis 10, **dadurch gekennzeichnet, dass** der erste Abschnitt (20), der zweite Abschnitt (30) und/oder die Tragrippe (80) als Strangpressprofil ausgebildet sind.

12. Abdichtungsanordnung für den Übergang zwischen einer Fahrzeugscheibe (40) und einem Wasserkasten (50), insbesondere für den unteren Bereich einer Kraftfahrzeug-Windschutzscheibe, mit einem Profilelement (10) nach einem der Ansprüche 1 bis 11.

## Claims

1. Profile element (10) for connecting a vehicle pane (40) to a water chamber (50), having a first section (20) which can be fastened to the vehicle pane, and a second section (30) which comprises or forms a locking recess (60) for releasable attachment of the water chamber (50), wherein the water chamber (50) has a rib (51) which can be fastened in force-fitting or form-fitting manner in the locking recess (60), and having at least one sealing element (90) which can fit between the lower edge (42) of the vehicle pane (40) and the upper edge (53) of the water chamber (50) and, in the mounted position of the water chamber (50), forms an essentially smooth, flush-mounted transition between the vehicle pane (40) and the water chamber (50), **characterized in that** at least one locking element (70) is provided which is configured such that the introduction of the rib (51) of the water chamber (50) into the locking recess (60) in a first direction (R1) is facilitated, whereas the removal of the rib (51) from the locking recess (60) in the opposing direction (R2) is hindered and wherein the or each locking element (70) is arranged at an angle (α) to the direction (R1, R2) and thus forms a barb, wherein the locking recess (60) is formed by a sprung leg (62) and a support rib (80), wherein the support rib (80) is provided between the first section (20) and the second section (30) of the profile element (10), the support rib (80) supporting the at least one sealing element (90), wherein the free end (64) of the sprung leg (62) and the support rib (80) delimit the engaging aperture (61) of the locking recess (60), wherein the free end (64) of the sprung leg (62) is provided with an undercut (63) within the locking recess (60) and the locking element (70) is fixed to the sprung leg (62) in the region of the undercut (63), or wherein the support rib (80) forms an undercut (83) within the locking recess (60) and the locking element (70) is fixed to the support rib (80) in the region of the undercut (83).

2. Profile element according to claim 1, **characterized in that** the or each locking element (70) is at least partially an elastically deformable element.

3. Profile element according to one of the claims 1 to 2, **characterized in that** the or each locking element (70) is provided at the free longitudinal edge (72) thereof with an arched edge or nose edge (71).

4. Profile element according to one of the claims 1 to 3, **characterized in that** at least one locking element (70) is arranged within the locking recess (60) and can be brought, in force-fitting manner and/or form-fitting manner, into engagement with the rib (51) of the water chamber (50).

5. Profile element according to claim 4, **characterized in that** the locking recess (60) has or forms an engaging aperture (61), wherein the or each locking element (70) projects at least partially into the engaging aperture (61) .

6. Profile element according to claim 4 relating to claim 3 or according to claim 5 relating to claim 3, **characterized in that** the arched edge or nose edge (71) of the or each locking element (70) is supported, in the mounted position of the water chamber (50), against the rib (51) of said water chamber (50).

7. Profile element according to one of the claims 1 to 6, **characterized in that** the sprung leg (62) is essentially formed L-shaped, U-shaped or hook-shaped.

8. Profile element according to one of the claims 1 to 7, **characterized in that** the or each sealing element (90) and/or the or each locking element (70) is connected in fused manner to the support rib (80).

9. Profile element according to one of the claims 1 to 8, **characterized in that** the or each sealing element (90) and/or the or each locking element (70) is constructed integrally with the support rib (80).

10. Profile element according to one of the claims 1 to 9, **characterized in that** the first section (20), the second section (30) and/or the support rib (80) are provided at least partially with a stiffening inlay (26).

11. Profile element according to one of the claims 1 to 10, **characterized in that** the first section (20), the second section (30) and/or the support rib (80) are configured as an extruded profile.

12. Sealing arrangement for the transition between a vehicle pane (40) and a water chamber (50), in particular for the lower region of a vehicle windscreen, having a profile element (10) according to one of the claims 1 to 11.

## Revendications

1. Elément profilé (10) destiné à relier une vitre de véhicule (40) à un réservoir à eau (50), avec une première section (20), qui peut être fixée à la vitre du véhicule, avec une deuxième section (30), qui comporte ou forme, pour la fixation amovible du réservoir à eau (50), un évidement d'encliquetage (60), le réservoir à eau (50) présentant une nervure (51) qui peut être fixée par liaison de force et/ou par complémentarité de forme dans l'évidement d'encliquetage (60), et avec au moins un élément d'étanchéité (90), qui peut être inséré entre l'arête inférieure (42) de la vitre du véhicule (40) et le bord supérieur (53) du réservoir à eau (50) et, forme en position montée du réservoir à eau (50), une transition sensiblement lisse et affleurante entre la vitre du véhicule (40) et le réservoir à eau (50), **caractérisé en ce qu'**au moins un élément d'encliquetage (70) est prévu, qui est conçu de sorte que l'introduction de la nervure (51) du réservoir à eau (50) dans l'évidement d'encliquetage (60) est facilitée dans une première direction (R1), a contrario l'extraction de la nervure (51) hors de l'évidement d'encliquetage (60) dans la direction opposée (R2) est compliquée et l'élément d'encliquetage ou chaque élément d'encliquetage (70) est disposé suivant un angle (α) par rapport à la direction (R1, R2) et forme ainsi un ardillon, l'évidement d'encliquetage (60) est formé d'une branche de ressort (62) et d'une nervure de support (80), entre la première section (20) et la deuxième section (30) de l'élément profilé (10) se trouve la nervure de support (80) qui supporte l'au moins un élément d'étanchéité (90), l'extrémité libre (64) de la branche de ressort (62) et la nervure de support (80) limitant l'ouverture d'engagement (61) de l'évidement d'encliquetage (60), l'extrémité libre (64) de la branche de ressort (62) est munie, à l'intérieur de l'évidement d'encliquetage (60), d'une contre-dépouille (63) et l'élément d'encliquetage (70) est fixé dans la zone de la contre-dépouille (63) ou la nervure de support (80) forme, à l'intérieur de l'évidement d'encliquetage (60), une contre-dépouille (83) et l'élément d'encliquetage (70) est fixé dans la zone de la contre-dépouille (83).

2. Elément profilé selon la revendication 1, **caractérisé en ce que** l'élément d'encliquetage ou chaque élément d'encliquetage (70) est au moins partiellement un corps déformable élastiquement.

3. Elément profilé selon l'une des revendications 1 à 2, **caractérisé en ce que** l'élément d'encliquetage ou chaque élément d'encliquetage (70) est muni, sur son arête longitudinale (72) libre, d'une arête bombée ou en forme de nez (71).

4. Elément profilé selon l'une quelconque des revendications 1 à 3, **caractérisé en ce qu'**au moins un élément d'encliquetage (70) est disposé à l'intérieur de l'évidement d'encliquetage (60) et peut être mis en prise par liaison de force et/ou par complémentarité de forme avec la nervure (51) du réservoir à eau (50).

5. Elément profilé selon la revendication 4, **caractérisé en ce que** l'évidement d'encliquetage (60) comporte ou forme une ouverture d'engagement (61), l'élément d'encliquetage ou chaque élément d'encliquetage (70) dépassant au moins par sections dans l'ouverture d'engagement (61).

6. Elément profilé selon les revendications 4 et 3 ou selon les revendications 5 et 3, **caractérisé en ce que** l'arête bombée ou en forme de nez (71) de l'élément d'encliquetage ou de chaque élément d'encliquetage (70) s'appuie, en position montée du réservoir à eau (50), sur sa nervure (51).

7. Elément profilé selon l'une quelconque des revendications 1 à 6 , **caractérisé en ce que** la branche de ressort (62) façonnée sensiblement en forme de L, de U ou de crochet.

8. Elément profilé selon l'une quelconque des revendications 1 à 7, **caractérisé en ce que** l'élément d'étanchéité ou chaque élément d'étanchéité (90) et/ou l'élément d'encliquetage ou chaque élément d'encliquetage (70) est relié à la nervure de support (80) par liaison de matière.

9. Elément profilé selon l'une quelconque des revendications 1 à 8, **caractérisé en ce que** l'élément d'étanchéité ou chaque élément d'étanchéité (90) et/ou l'élément d'encliquetage ou chaque élément d'encliquetage (70) est façonné d'une seule pièce avec la nervure de support (80) .

10. Elément profilé selon l'une quelconque des revendications 1 à 9, **caractérisé en ce que** la première section (20), la deuxième section (30) et/ou la nervure de support (80) sont munies au moins par sections d'un insert de rigidification (26).

11. Elément profilé selon l'une quelconque des revendications 1 à 10, **caractérisé en ce que** la première section (20), la deuxième section (30) et/ou la nervure de support (80) sont conçues comme un profilé extrudé.

12. Dispositif d'étanchéité pour la transition entre une vitre de véhicule (40) et un réservoir à eau (50), en particulier pour la partie inférieure d'un pare-brise de véhicule, avec un élément profilé (10) selon l'une quelconque des revendications 1 à 11.
